# FASCICULE DE BREVET EUROPEEN

(11) **EP 3 050 461 B1**
(45) Date de publication et mention de la délivrance du brevet: **08.04.2020**
(21) Numéro de dépôt: 16152484.8
(22) Date de dépôt: 22.01.2016
(51) Int. Cl.: A47B 47/04, A47B 47/00, F16B 12/20

(54) **MODULE DÉMONTABLE À PANNEAUX, PANNEAU ET INSERT POUR LE MONTAGE D'UN TEL MEUBLE**
DEMONTIERBARES MODUL MIT PANELEN, PANEL UND EINSATZ FÜR DIE MONTAGE FÜR EIN SOLCHES MÖBELSTÜCKS
REMOVABLE MODULE WITH PANELS, PANEL AND INSERT FOR MOUNTING SUCH AN ITEM OF FURNITURE

(30) Priorité: 29.01.2015 FR 1550705
(43) Date de publication de la demande: 03.08.2016
(60) Demande divisionnaire: 19218839.9
(73) Titulaire: Chataignon, Bruno Jean Marie, 73240 Saint-Genix-sur-Guiers (FR)
(72) Inventeur: Chataignon, Bruno Jean Marie, 73240 Saint-Genix-sur-Guiers (FR)
(74) Mandataire: Talbot, Alexandre

(56) Documents cités:
- DE-A1-102010 033 151
- GB-A- 2 033 044
- GB-A- 2 209 062
- US-A- 3 730 568
- US-A- 4 650 263
- US-A- 4 895 473
- US-A- 5 403 109
- US-B1- 6 174 116

## Description

### Domaine technique de l'invention

L'invention concerne les meubles démontables à panneaux, les panneaux et inserts pour le montage de tels meubles.

### État de la technique

Actuellement, il existe des meubles démontables comprenant plusieurs panneaux indépendants qui sont assemblés pour monter un meuble spécifique, c'est-à-dire un meuble ayant une fonction particulière unique, comme une armoire, une table, une chaise... De manière générale les panneaux sont assemblés à l'aide d'outils, ce qui rend le montage des meubles plus difficile. Par ailleurs, des problèmes surviennent lors du démontage des panneaux car les pièces servant à fixer les panneaux s'usent et ne peuvent plus être utilisées pour un remontage du meuble. On peut citer le brevet américain US 6174116 qui divulgue un système de panneaux emboîtables réglables pour assembler une unité modulaire, telle qu'une étagère ou une boîte. On peut également citer le brevet américain US 3730568 qui divulgue un dispositif d'attache libérable pour des éléments de meubles. En outre, les meubles ainsi proposés sont conçus pour ne former qu'un seul et même élément. Il est donc avantageux de fournir un meuble qui puisse former différents éléments, tels une table, une chaise, une armoire, ..., avec les mêmes panneaux de manière à ne pas avoir à acheter différents meubles.

### Objet de l'invention

Un objet de l'invention consiste à palier les inconvénients précités, et plus particulièrement à fournir un panneau conformé pour un meuble démontable.

Un autre objet de l'invention consiste à fournir un insert particulièrement adapté pour le montage des panneaux.

Un autre objet de l'invention consiste à fournir un meuble dont le montage est facilité et qui soit démontable sans outils.

Selon un aspect de l'invention, il est proposé un panneau d'un meuble démontable, comprenant au moins une entaille située sur au moins un chant du panneau, chaque entaille comportant deux faces principales en regard l'une de l'autre et une face secondaire en regard d'une ouverture de l'entaille.

Chaque face principale comporte une rainure longitudinale s'étendant entre le chant et la face secondaire pour recevoir un insert amovible, et comporte une encoche perpendiculaire à la rainure longitudinale pour maintenir l'insert amovible dans l'entaille.

Ainsi on fournit un panneau adapté pour le montage d'un meuble démontable, et plus particulièrement un panneau qui puisse être monté sans outil. Un tel panneau permet de réaliser un meuble démontable modulaire pour former différents éléments ayant chacun une fonction distincte. On offre ainsi la possibilité de diminuer l'encombrement de plusieurs meubles, en assemblant différemment les panneaux pour réaliser divers meubles à fonctions variées.

Le panneau peut comprendre plusieurs entailles ayant chacune une même profondeur.

Les entailles peuvent être réparties sur au moins un chant du panneau avec un écart entre elles constant.

Selon un autre aspect de l'invention, il est proposé un insert amovible du type connecteur, comprenant deux languettes opposées destinées à être introduites dans les deux rainures longitudinales d'au moins une entaille d'un panneau tel que défini ci-avant, au moins un orifice pour recevoir une goupille, et un couvercle monté pivotant entre une position ouverte dans laquelle la goupille peut être introduite dans l'insert et l'insert peut être introduit dans ladite au moins une entaille, et une position fermée dans laquelle la goupille est bloquée dans l'insert et le couvercle est introduit dans les encoches de ladite au moins une entaille pour maintenir l'insert.

Un tel insert permet d'augmenter le nombre de combinaisons possibles lors de l'assemblage de deux panneaux entre eux. En effet, on peut assembler les panneaux dans un même plan, par exemple pour obtenir un panneau plus grand, ou les relier entre eux perpendiculairement, par exemple pour réaliser un meuble fermé.

L'insert selon l'invention a une forme parallélépipédique et dans lequel un premier orifice est situé sur une première face de l'insert, et un deuxième orifice est situé sur une deuxième face de l'insert adjacente à la première face et opposée à une troisième face de l'insert sur laquelle est situé le couvercle.

Le couvercle peut comprendre deux plaques situées respectivement en regard des premier et deuxième orifices, chaque plaque comprenant un trou traversant principal pour recevoir la goupille lorsque le couvercle est dans la position ouverte, et un trou traversant secondaire débouchant dans le trou traversant principal de la plaque afin de bloquer la goupille lorsque le couvercle est dans la position fermée.

Selon encore un autre aspect de l'invention, il est proposé un meuble démontable comprenant au moins un panneau tel que défini ci-avant.

Un tel meuble est facile à démonter car il ne nécessite pas d'utiliser des outils. Il permet de pouvoir modifier la fonction du meuble, c'est-à-dire de monter différents éléments avec les même panneaux pour réaliser, par exemple, une table, une chaise, une armoire, un banc, un bureau... On facilite également le rangement du meuble démonté.

Le meuble peut comprendre en outre un insert amovible du type équerre ayant deux parties en forme d'équerre séparées par une plaque d'appui introduite dans au moins une encoche d'au moins une entaille dudit au moins un panneau.

Le meuble peut également comprendre un insert amovible du type pivot ayant un corps en forme de « U » muni d'un ergot fournissant une fonction pivot, le corps étant introduit dans au moins une encoche d'au moins une entaille dudit au moins un panneau.

Le meuble peut encore comprendre un insert amovible du type connecteur tel que défini ci-avant introduit dans au moins une entaille dudit au moins un panneau pour le montage du meuble.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1, illustre schématiquement une vue en perspective d'un panneau selon l'invention ;
- les figures 2 et 3, illustrent schématiquement des vues en perspective de plusieurs inserts selon l'invention ;
- la figure 4, illustre de façon schématique une vue en perspective éclatée d'un insert amovible du type connecteur ;
- les figures 5 et 6, illustrent de façon schématique deux vues, respectivement en perspective et en coupe selon un plan transversal, de l'insert amovible du type connecteur où le couvercle est dans une position ouverte et une goupille est insérée dans un premier orifice de l'insert ;
- les figures 7 et 8, illustrent de façon schématique deux vues, respectivement en perspective et en coupe selon un plan transversal, de l'insert amovible du type connecteur où le couvercle est dans une position fermée et une goupille est insérée dans un premier orifice de l'insert ;
- les figures 9 et 10, illustrent de façon schématique deux vues, respectivement en perspective et en coupe selon un plan longitudinal, de l'insert amovible du type connecteur où le couvercle est dans une position ouverte et une goupille est insérée dans un deuxième orifice de l'insert ;
- les figures 11 et 12, illustrent de façon schématique deux vues, respectivement en perspective et en coupe selon un plan longitudinal, de l'insert amovible du type connecteur où le couvercle est dans une position fermée et une goupille est insérée dans un deuxième orifice de l'insert ;
- la figure 13, illustre de façon schématique une vue en perspective d'un mode d'assemblage de deux panneaux ; et
- les figures 14 à 16, illustrent schématiquement des vues en perspective de différents modes de réalisation d'un meuble démontable.

### Description détaillée

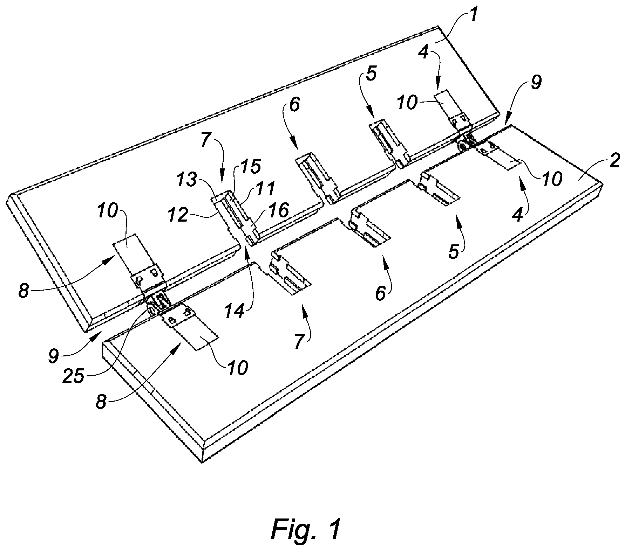

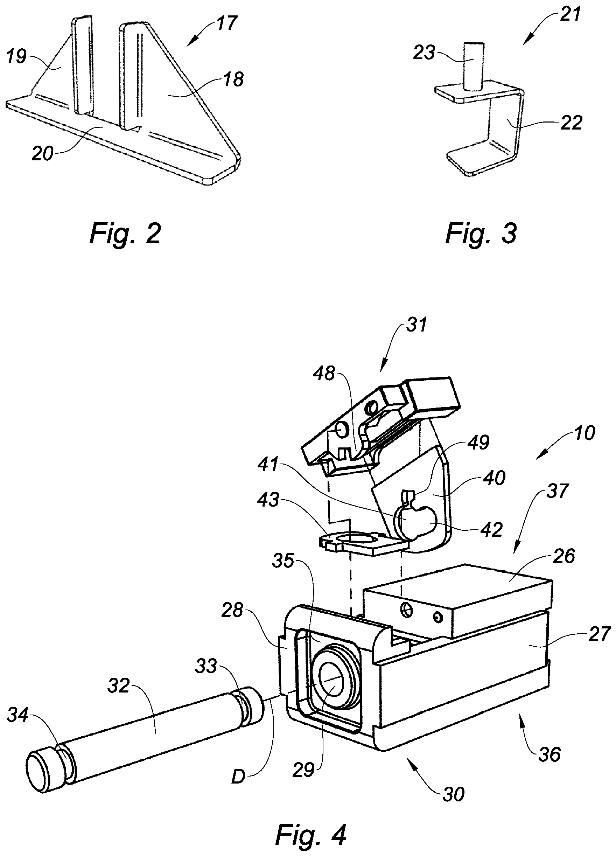

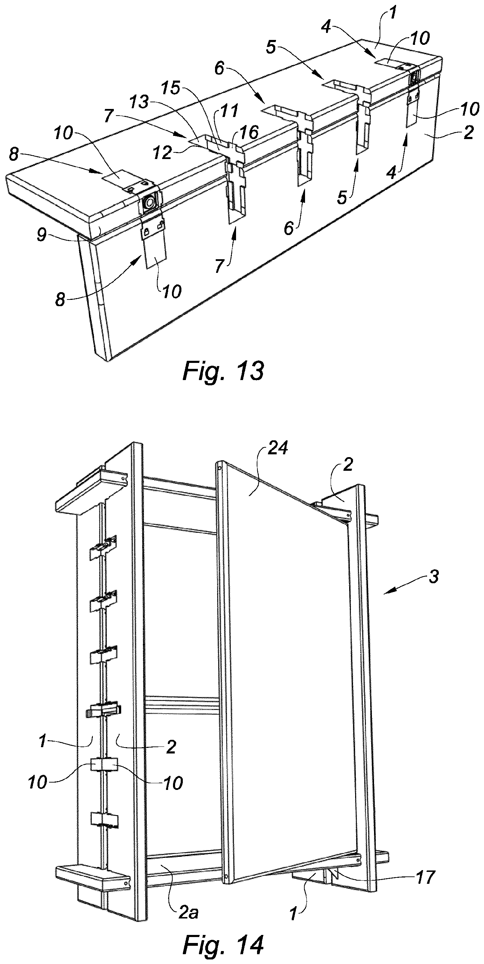

Sur la figure 1, on a représenté deux panneaux 1, 2 d'un meuble démontable 3, dont des exemples de montage sont illustrés aux figures 14 à 16. Les panneaux 1, 2 ont une forme globalement parallélépipédique, en particulier une forme de parallélépipède rectangle. Les panneaux 1, 2 peuvent être en bois ou en plastique. On peut encore envisager de réaliser les panneaux 1, 2 en métal. Chaque panneau 1, 2 comprend au moins une entaille 4 à 8 située sur un premier chant 9 du panneau 1, 2. Dans sa forme parallélépipédique, chaque panneau 1, 2 comporte quatre chants. De façon générale, les panneaux peuvent comprendre plusieurs entailles 4 à 8 situées sur leurs chants. Chaque entaille 4 à 8 correspond à un enlèvement d'une partie du panneau 1, 2 effectué sur un chant 9 du panneau, c'est-à-dire au bord du panneau 1, 2. Une entaille 4 à 8 est destinée à recevoir un insert amovible 10pour le montage des panneaux 1, 2 entre eux de manière à réaliser le meuble démontable 3. Les entailles 4 à 8 sont également destinées à recevoir des inserts amovibles particuliers 17, 21, illustrés respectivement aux figures 2 et 3. Par exemple, une entaille 4 à 8 d'un premier panneau 1 peut recevoir une autre entaille 4 à 8 d'un deuxième panneau 2a pour un montage du premier panneau 1 perpendiculairement au deuxième panneau 2a, comme illustré sur la figure 14. Chaque entaille 4 à 8 comporte une ouverture 14, deux faces principales 11, 12 situées en regard l'une de l'autre, et une face secondaire 13 située en regard de l'ouverture 14, c'est-à-dire opposée à l'ouverture 14. Chaque face principale 11, 12 comporte une rainure longitudinale 15 s'étendant depuis le chant 9, où est formée l'entaille, jusqu'à la face secondaire 13. Les rainures longitudinales 15 sont destinées à recevoir un insert amovible 10, 17, 21. En outre, chaque face principale 11, 12 comporte une encoche 16 perpendiculaire à la rainure longitudinale 15 de la face principale 11, 12. Les encoches 16 sont destinées à maintenir l'insert amovible 10, 17, 21 dans l'entaille 4 à 8 lorsque le meuble 3 est monté.

Par exemple, chaque panneau 1, 2, 2a comprend plusieurs entailles 4 à 8. Dans le mode de réalisation illustré à la figure 1, chaque panneau 1, 2 comprend cinq entailles 4 à 8. Plus le nombre d'entailles augmente et plus le nombre de combinaisons possibles pour positionner un panneau par rapport à l'autre augmente. Ainsi, on peut réaliser différents meubles 3 ayant chacun une fonction distincte à partir d'un même ensemble de panneaux 1, 2. Le nombre des panneaux utilisés pour monter ces différents meubles pouvant varier d'un meuble à l'autre. De préférence les entailles 4 à 8 ont chacune une même profondeur, en d'autres termes les longueurs de toutes les rainures longitudinales 15 sont égales. Ce qui permet d'introduire un même type d'insert 10, 17, 21 dans chacune des entailles 4 à 8, on diminue ainsi le nombre d'inserts différents à fabriquer. Par exemple, les entailles 4 à 8 sont toutes identiques. Selon le mode de réalisation illustré à la figure 1, les entailles 4 à 8 sont réparties sur au moins un chant 9 d'un panneau 1, 2 avec un écart entre elles constant. Ainsi on peut réaliser plusieurs panneaux identiques, qui sont plus simples à fabriquer. En variante, chaque panneau 1, 2 peut avoir des entailles 4 à 8 sur ses quatre chants.

Sur les figures 2 et 3, on a représenté deux inserts 17, 21 amovibles pour le montage des panneaux 1, 2.

Sur la figure 2, on a représenté un insert amovible du type équerre 17 ayant deux parties 18, 19 en forme d'équerre séparées par une plaque d'appui 20 destinée à être introduite dans au moins une encoche 16 d'au moins une entaille 4 à 8. Cet insert du type équerre 17 permet de stabiliser l'assemblage de deux panneaux 2, 2a perpendiculaires entre eux, comme illustré sur la figure 14. Plus particulièrement, les encoches 16 des entailles 4 à 8 d'au moins un panneau 1, 2, 2a ont toutes une même largeur égale a celle de la plaque d'appui 20.

Sur la figure 3, on a représenté un insert amovible du type pivot 21 ayant un corps 22 en forme de « U » muni d'un ergot 23, de préférence cylindrique à section circulaire, fournissant une fonction pivot. Le corps 22 de l'insert du type pivot 21 est destiné à être introduit dans au moins une encoche 16 d'au moins une entaille 4 à 8. Cet insert du type pivot 17 fournit une fonction pivot pour, notamment, recevoir un panneau mobile afin de monter un ouvrant 24 pour réaliser une armoire 3, comme illustré sur la figure 14. Plus particulièrement, les encoches 16 des entailles 4 à 8 d'au moins un panneau 1, 2 ont toutes une même largeur égale a celle du corps 22 de l'insert 21.

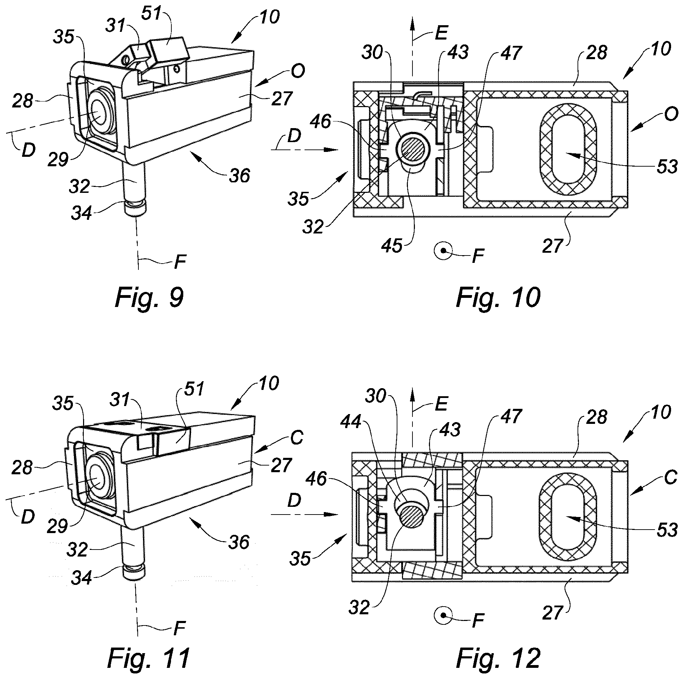

Sur les figures 4 à 12, on a représenté un insert amovible du type connecteur 10 destiné à être introduit dans au moins une entaille 4 à 8. L'insert du type connecteur 10 peut être connecté à un autre insert du type connecteur 10 situé sur un autre panneau pour assembler deux panneaux entre eux, comme illustré sur les figures 1 et 13. En outre, l'insert du type connecteur 10 peut être connecté à un accessoire 25, par exemple une demi-charnière comme illustré sur la figure 1, ou une roulette afin de fournir une table à roulettes, ... Sur la figure 1, on a représenté un mode de réalisation dans lequel les inserts du type connecteur 10 sont chacun connectés à une demi-charnière. Ainsi, les inserts 10 forment ensemble une charnière pour que les panneaux 1, 2 puissent être mobiles l'un par rapport à l'autre.

L'insert du type connecteur 10 a un corps 26 ayant une forme globalement parallélépipédique, de préférence une forme d'un parallélépipède rectangle. L'insert 10 comporte deux languettes 27, 28 situées sur deux faces latérales opposées de l'insert 10, au moins un orifice 29, 30, et un couvercle 31.

Les languettes 27, 28 sont destinées à être introduites dans les deux rainures longitudinales 15 d'une entaille 4 à 8 d'un panneau 1, 2, 2a. Pour introduire l'insert 10 dans l'entaille 4 à 8, on l'introduit par l'ouverture 14 de l'entaille 4 à 8 et on fait coulisser les deux languettes 27, 28 dans les rainures longitudinales 15 jusqu'au contact entre le corps 26 de l'insert 10 et la face secondaire 13 de l'entaille 4 à 8. Les rainures longitudinales 15 jouent alors le rôle de guide de l'insert amovible 10 dans l'entaille 4 à 8.

Les orifices 29, 30 sont destinés à recevoir, l'un ou l'autre, une goupille 32. La goupille 32 est une petite pièce, de préférence en métal, qu'on introduit dans l'insert 10, en traversant un orifice 29, 30 pour que l'ensemble constitue un assemblage rigide démontable. La goupille 32 comporte un corps cylindrique et au moins une fente 33, 34 située à chaque extrémité de la goupille 32 et destinée à bloquer la goupille 32 dans l'insert amovible du type connecteur 10. Par exemple, la goupille 32 comporte une seule fente 33 située à une extrémité, et l'autre extrémité peut être reliée à un accessoire 25, comme une demi-charnière ou une roulette, ... Lorsque la goupille 32 comporte deux fentes 33, 34, elle permet de relier deux inserts du type connecteur 10 entre eux, et donc de relier deux panneaux 1, 2 portant respectivement les deux inserts 10 dans lesquels la goupille 32 est introduite, comme illustré sur les figures 1, 13 et 14. Chaque orifice 29, 30 forme un passage pour introduire la goupille 32 dans l'insert 10. Par exemple, un premier orifice 29 est situé sur une première face 35 de l'insert 10 et un deuxième orifice 30 est situé sur une deuxième face 36 adjacente à la première face 35. La première face 35 est adjacente aux deux faces latérales qui portent les languettes 27, 28. Ainsi, on offre plusieurs configurations possibles pour relier mécaniquement deux panneaux 1, 2 entre eux dans lesquels sont respectivement introduits deux inserts du type connecteur 10. Par exemple, les deux premiers orifices 29 des deux inserts 10 permettent de relier les deux panneaux 1, 2 dans un même plan, comme illustré sur la figure 14, lorsqu'une goupille 32 est insérée dans les deux premiers orifices 29 des deux inserts 10. Le deuxième orifice 30 des inserts 10 permet, quant à lui, de relier deux panneaux perpendiculairement l'un à l'autre. En variante, lorsqu'une goupille 32 est insérée dans le premier orifice 29 du premier insert et dans le deuxième orifice 30 du deuxième insert, on relie les deux panneaux 1, 2 perpendiculairement l'un à l'autre, comme illustré sur la figure 13. Selon encore une autre variante, lorsque la goupille 32 est insérée dans les deuxièmes orifices 30 des deux inserts, on relie les deux panneaux 1, 2 parallèlement l'un à l'autre.

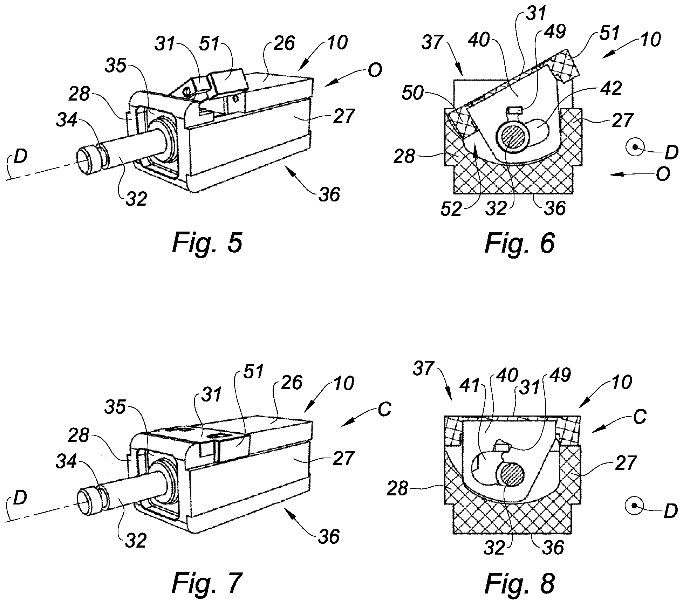

Le couvercle 31 est monté sur une troisième face 37 de l'insert 10 opposée à la deuxième face 36. Le couvercle 31 est monté pivotant sur le corps 26 de l'insert 10, entre une position ouverte O, illustrée aux figures 5, 6 et 9, 10, et une position fermée C, illustrée aux figures 7, 8 et 11, 12. Dans la position ouverte O, une goupille 32 peut être introduite dans l'insert 10 et l'insert 10 peut être introduit dans une entaille 4 à 8 d'un panneau 1, 2, 2a. Dans la position fermée C, la goupille 32 qui a été introduite dans l'insert 10 est bloquée dans l'insert 10 et le couvercle 31 est introduit dans les encoches 16 de l'entaille 4 à 8 pour maintenir l'insert dans l'entaille 4 à 8. Plus particulièrement, le couvercle 31 comporte une première plaque 40 montée fixe sur une face interne du couvercle 31. La première plaque 40 est montée perpendiculairement à la face interne du couvercle 31 et perpendiculairement à un premier axe D correspondant à un axe longitudinal de l'insert 10. Le premier axe D correspond également à la direction d'introduction D d'une goupille 32 dans le premier orifice 29 de l'insert 10. En d'autres termes, la première plaque est montée en regard du premier orifice 29. La première plaque 40 comporte un premier trou traversant 41 destiné à recevoir une extrémité d'une goupille 32, et un deuxième trou traversant 42 destiné à bloquer la goupille 32 dans l'insert 10. Le premier trou traversant 41 est également noté trou principal de la première plaque 40 et le deuxième trou traversant 42 est également noté trou secondaire de la première plaque 40. Le deuxième trou traversant 42 débouche en partie dans le premier trou traversant 41. En outre, le diamètre du premier trou traversant 41 est supérieur à celui de la goupille 32 pour qu'elle puisse traverser le premier trou traversant 41, lorsque le couvercle 31 est dans la position ouverte O. Le diamètre du deuxième trou traversant 42 est, quant à lui, supérieur à celui des fentes 33, 34 d'une goupille 32, et inférieur à celui du corps de la goupille 32 pour retenir la goupille 32 dans le deuxième trou traversant 42 lorsque le couvercle 31 a pivoté dans sa position fermée C. En d'autres termes, lorsque le couvercle 31 est dans sa position ouverte O, le premier trou traversant 41 est situé en regard du premier orifice 29 de l'insert 10, et on peut introduire une goupille 32 successivement dans le premier orifice 29, puis dans le premier trou traversant 41. De préférence, on introduit la goupille 32 jusqu'à ce qu'une fente 33 soit située au niveau du premier trou traversant 41. On peut prévoir une butée dans l'insert 10 pour positionner correctement la fente 33 au niveau du premier trou traversant 41. Puis, on pivote le couvercle 31 dans sa position fermée C, par une rotation du couvercle 31 autour du premier axe D. La rotation du couvercle 31 entraîne une rotation de la première plaque 40 autour du premier axe D, et entraîne l'introduction du deuxième trou traversant 42 dans la fente 33. Grâce au fait que le deuxième trou traversant 42 débouche en partie dans le premier trou traversant 41, le deuxième trou traversant 42 peut s'introduire dans la fente 33. En particulier l'ouverture située entre les premier et deuxième trous traversant 41, 42 est supérieur au diamètre des fentes 33, 34 de la goupille 32 pour permettre d'introduire, par rotation de la première plaque 40, le deuxième trou traversant 42 dans une fente 33, 34 de la goupille 32. Une fois le couvercle 31 mis en position fermée C, la goupille 32 est bloquée dans l'insert 10. Pour retirer la goupille 32 de l'insert 10, on pivote le couvercle 31 dans sa position ouverte O, ce qui dégage le deuxième trou traversant 42 de la fente 33, en d'autres termes le premier trou traversant 41 est à nouveau introduit dans la fente 33 et on peut extraire la goupille 32 du premier trou traversant 41.

Avantageusement, le couvercle 31 peut comporter une deuxième plaque 43 montée mobile en translation selon un deuxième axe E à la fois perpendiculaire au premier axe D et perpendiculaire à une direction F d'introduction d'une goupille 32 dans le deuxième orifice 30 de l'insert 10. La deuxième plaque 43 est montée perpendiculairement à la direction F d'introduction d'une goupille 32 dans le deuxième orifice 30 de l'insert 10. En d'autres termes, la deuxième plaque 43 est montée en regard du deuxième orifice 30. La deuxième plaque 43 comporte un troisième trou traversant 44 destiné à recevoir une extrémité d'une goupille 32, et un quatrième trou traversant 45 destiné à bloquer la goupille 32 dans l'insert 10. Le troisième trou traversant 44 est également noté trou principal de la deuxième plaque 43 et le quatrième trou traversant 45 est également noté trou secondaire de la deuxième plaque 43. Le quatrième trou traversant 45 débouche en partie dans le troisième trou traversant 44. En outre, le diamètre du troisième trou traversant 44 est supérieur à celui de la goupille 32 pour qu'elle puisse traverser le troisième trou traversant 44, lorsque le couvercle 31 est dans la position ouverte O. Le diamètre du quatrième trou traversant 45 est, quant à lui, supérieur à celui des fentes 33, 34 d'une goupille 32, et inférieur à celui du corps de la goupille 32 pour retenir la goupille 32 dans le quatrième trou traversant 45 lorsque le couvercle 31 a pivoté dans sa position fermée C. En d'autres termes, lorsque le couvercle 31 est dans sa position ouverte O, le troisième trou traversant 44 est situé en regard du deuxième orifice 30 de l'insert 10, et on peut introduire une goupille 32 successivement dans le deuxième orifice 30, puis dans le troisième trou traversant 44. De préférence, on introduit la goupille 32 jusqu'à ce qu'une fente 33 soit située au niveau du troisième trou traversant 44. On peut prévoir une butée additionnelle sur la face interne du couvercle 31 pour positionner correctement la fente 33 au niveau du troisième trou traversant 44. Puis, on pivote le couvercle 31 dans sa position fermée C, par une rotation du couvercle 31 autour du premier axe D. La rotation du couvercle 31 entraîne une translation de la deuxième plaque 43 le long du deuxième axe E, et entraîne l'introduction du quatrième trou traversant 45 dans la fente 33. Grâce au fait que le quatrième trou traversant 45 débouche en partie dans le troisième trou traversant 44, le quatrième trou traversant 44 peut s'introduire dans la fente 33. En particulier l'ouverture située entre les troisième et quatrième trous traversant 44, 45 est supérieur au diamètre des fentes 33, 34 de la goupille 32 pour permettre d'introduire, par translation de la deuxième plaque 43, le quatrième trou traversant 45 dans une fente 33, 34 de la goupille 32. En particulier, la deuxième plaque 43 comporte deux ergots latéraux 46, 47. Un premier ergot 46 est introduit dans un premier crochet 48 formé sur le couvercle 31, et faisant saillie de la face interne du couvercle 31. Le deuxième ergot 47 est introduit dans un deuxième crochet 49 formé sur la première plaque 43, le deuxième crochet 49 correspondant à un évidement qui reçoit le deuxième ergot 47. Lorsque le couvercle 31 pivote dans sa position fermée C, les crochets 48, 49 poussent les ergots 46, 47 de la deuxième plaque 43 pour la faire translater selon le deuxième axe E. A l'inverse, lorsque le couvercle 31 pivote dans sa position ouverte O, les crochets 48, 49 poussent la deuxième plaque 43 dans le sens inverse pour ramener le troisième trou traversant 44 en regard du deuxième orifice 30 de l'insert 10. Lorsque le couvercle 31 est dans sa position fermée C, la goupille 32 est bloquée dans l'insert 10. Pour retirer la goupille 32 de l'insert 10, on pivote le couvercle 31 dans sa position ouverte O, ce qui dégage le quatrième trou traversant 45 de la fente 33, en d'autres termes le troisième trou traversant 44 est à nouveau introduit dans la fente 33 et on peut extraire la goupille 32 du troisième trou traversant 44.

Par ailleurs, le couvercle 31 d'un insert 10 permet de maintenir l'insert 10 en position dans une entaille 4 à 8 d'un panneau 1, 2, 2a. Lorsque le couvercle 31 est dans sa position ouverte O, l'insert peut être introduit dans l'entaille 4 à 8 en faisant glisser les languettes 27, 28 dans les rainures longitudinales 15 de l'entaille 4 à 8, et dans ce cas les bords latéraux 50, 51 du couvercle 31 ne gênent pas. En effet, comme on peut le voir sur la figure 6, un premier bord latéral 50 du couvercle 31 est rentré dans un logement 52 de l'insert 10 pour être placé au niveau de la languette 28 de l'insert 10. Dans cette position le premier bord latéral 50 du couvercle 31 n'empêche pas l'introduction de la languette 28 dans une rainure longitudinal 15. En outre, le deuxième bord latéral 51 du couvercle 31 est situé à l'extérieur du corps 26 de l'insert 10, et il ne gêne pas l'introduction de l'autre languette 27 dans l'autre rainure longitudinale 15 de l'entaille 4 à 8. Puis, après avoir introduit l'insert 10 dans l'entaille 4 à 8, jusqu'à être en contact avec la face secondaire 13, les bords latéraux 50, 51 se trouvent positionnés en regard des encoches 16 de l'entaille 4 à 8. Lorsqu'on pivote le couvercle 31 dans sa position fermée C, les bords latéraux 50, 51 s'introduisent respectivement dans les encoches 16 de l'entaille 4 à 8, comme illustré sur les figures 1 et 13. Avantageusement, l'insert du type connecteur 10, une fois introduit dans une entaille 4 à 8, bouche l'entaille 4 à 8 de sorte que des éléments ne passent pas entre l'insert 10 et le panneau 1, 2, 2a.

En outre, l'insert du type connecteur 10 peut comporter un trou oblong 53 situé sur la deuxième face 36 de l'insert 10. Le trou oblong 53 peut recevoir une première extrémité d'une goupille 32, par exemple l'autre extrémité pouvant être introduite dans un autre insert, afin de pouvoir régler la position de la goupille 32 par rapport à l'insert 10 ayant le trou oblong 53. On peut ainsi incliner l'orientation d'un panneau par rapport à un autre pour réaliser, par exemple, un dossier d'une chaise dont l'orientation est inclinable.

Sur la figure 13, on a représenté deux panneaux 1, 2 qui sont reliés mécaniquement et perpendiculairement l'un à l'autre à l'aide de quatre inserts amovibles du type connecteur 10.

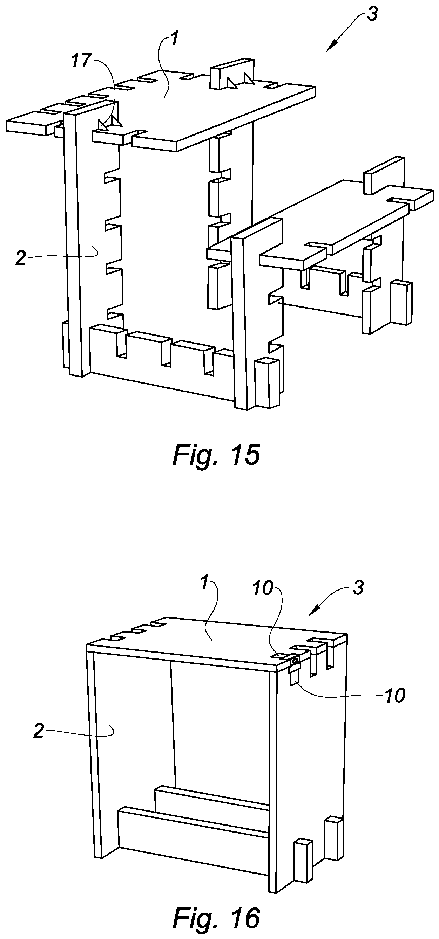

Sur les figures 14 à 16, on a représenté plusieurs modes de réalisation d'un meuble démontable 3. Sur la figure 14, on a représenté une armoire avec un panneau ouvrant 24, deux paires de panneaux latéraux, chaque paire ayant deux panneaux reliés mécaniquement dans un même plan. L'armoire 3 comporte en outre un panneau 2a faisant office de rayon et maintenu aux paires de panneaux par des connecteurs du type équerre 17. La figure 15 illustre une table comprenant un banc. La figure 16 illustre une table.

L'invention qui vient d'être décrite est particulièrement adaptée pour fournir des meubles démontables, modulaires afin de réaliser des meubles ayant des fonctions différentes avec les mêmes éléments, c'est-à-dire avec les mêmes panneaux et les mêmes inserts. De tels meubles ont l'avantage de pouvoir être montés et démontés facilement sans outils. Ces meubles sont particulièrement robustes une fois montés.

## Revendications

1. Panneau (1, 2) d'un meuble démontable, comprenant au moins une entaille (4 à 8) située sur au moins un chant (9) du panneau (1, 2), chaque entaille (4 à 8) comportant deux faces principales (11, 12) en regard l'une de l'autre et une face secondaire (13) en regard d'une ouverture (14) de l'entaille (4 à 8), tel que chaque face principale (11, 12) comporte une rainure longitudinale (15) s'étendant entre le chant (9) et la face secondaire (13) pour recevoir un insert amovible (10), et **caractérisé en ce que** chaque face principale (11, 12) comporte une encoche (16) perpendiculaire à la rainure longitudinale (15) pour maintenir l'insert amovible (10) dans l'entaille (4 à 8).

2. Panneau selon la revendication 1, comprenant plusieurs entailles (4 à 8) ayant chacune une même profondeur.

3. Panneau selon la revendication 1 ou 2, dans lequel les entailles (4 à 8) sont réparties sur au moins un chant (9) du panneau (1, 2) avec un écart entre elles constant.

4. Insert amovible du type connecteur (10), comprenant deux languettes (27, 28) opposées destinées à être introduites dans les deux rainures longitudinales (15) d'au moins une entaille (4, 8) d'un panneau (1, 2) selon l'une des revendications 1 à 3, au moins un orifice (29, 30) pour recevoir une goupille (32), et un couvercle (31) monté pivotant entre une position ouverte (O) dans laquelle la goupille (32) peut être introduite dans l'insert (10) et l'insert (10) peut être introduit dans ladite au moins une entaille (4 à 8), et une position fermée (C) dans laquelle la goupille (32) est bloquée dans l'insert (10) et le couvercle (31) est introduit dans les encoches (16) de ladite au moins une entaille (4 à 8) pour maintenir l'insert (10), tel qu'il a une forme parallélépipédique et **caractérisé en ce qu'**un premier orifice (29) est situé sur une première face (35) de l'insert (10), et un deuxième orifice (30) est situé sur une deuxième face (36) de l'insert (10) adjacente à la première face (35) et opposée à une troisième face (37) de l'insert (10) sur laquelle est situé le couvercle (31).

5. Insert selon la revendication 4, dans lequel le couvercle (31) comprend deux plaques (40, 43) situées respectivement en regard des premier et deuxième orifices (29, 30), chaque plaque (40, 43) comprenant un trou traversant principal (41, 44) pour recevoir la goupille (32) lorsque le couvercle (31) est dans la position ouverte (O), et un trou traversant secondaire (42, 45) débouchant dans le trou traversant principal (41, 44) de la plaque (40, 43) afin de bloquer la goupille (32) lorsque le couvercle (31) est dans la position fermée.

6. Meuble démontable comprenant au moins un panneau (1, 2) selon l'une des revendications 1 à 3.

7. Meuble selon la revendication 6, comprenant en outre un insert amovible du type équerre (17) ayant deux parties (18, 19) en forme d'équerre séparées par une plaque d'appui (20) introduite dans au moins une encoche (16) d'au moins une entaille (4 à 8) dudit au moins un panneau (1, 2).

8. Meuble selon la revendication 6 ou 7, comprenant un insert amovible du type pivot (21) ayant un corps (22) en forme de « U » muni d'un ergot (23) fournissant une fonction pivot, le corps (22) étant introduit dans au moins une encoche (16) d'au moins une entaille (4 à 8) dudit au moins un panneau (1, 2).

9. Meuble selon l'une des revendications 6 à 8, comprenant un insert amovible du type connecteur (10) selon l'une des revendications 4 à 5 introduit dans au moins une entaille (4 à 8) dudit au moins un panneau (1, 2) pour le montage du meuble.

## Patentansprüche

1. Platte (1, 2) eines zerlegbaren Möbelstücks, die mindestens eine Aussparung (4 bis 8) umfasst, die sich an mindestens einer Kante (9) der Platte (1, 2) befindet, wobei jede Aussparung (4 bis 8) zwei einander gegenüber liegende Hauptseiten (11, 12) und eine Sekundärseite (13) umfasst, die sich gegenüber (14) der Aussparung (4 bis 8) befindet, in der Weise, dass jede Hauptseite (11, 12) eine Längsrille (15) umfasst, die sich zwischen der Kante (9) und der Sekundärseite (13) erstreckt, um einen wegnehmbaren Einsatz (10) aufzunehmen, und **dadurch gekennzeichnet, dass** jede Hauptseite (11, 12) eine Vertiefung (16) umfasst, die sich quer zur Längsrille (15) erstreckt, um den wegnehmbaren Einsatz (10) in der Aussparung (4 bis 8) zu halten.

2. Platte nach Anspruch 1, die mehrere Aussparungen (4 bis 8) umfasst, die jeweils ein und dieselbe Tiefe aufweisen.

3. Platte nach Anspruch 1 oder 2, bei der die Aussparungen (4 bis 8) mit gleichbleibendem Abstand voneinander auf mindestens eine Kante (9) der Platte (1, 2) verteilt sind.

4. Wegnehmbarer Einsatz nach Art eines Verbinders (10), der zwei entgegengesetzt angeordnete Leisten (27, 28), die dazu bestimmt sind, in die beiden Längsrillen (15) mindestens einer Aussparung (6 bis 8) einer Platte (1, 2) nach den Ansprüchen 1 bis 3 eingeführt zu werden, mindestens eine Öffnung (29, 30) zur Aufnahme eines Stifts (32) und einen Deckel (31) umfasst, der schwenkbar montiert ist zwischen einer offenen Position (O), in der der Stift (32) in den Einsatz (10) und der Einsatz (10) in die mindestens eine Aussparung (4 bis 8) eingeführt werden kann, und einer geschlossenen Position (C), in der der Stift (32) in dem Einsatz (10) blockiert und der Deckel (31) in die Vertiefungen (16) der mindestens einen Aussparung (4 bis 8) eingeführt ist, um den Einsatz (10) zu halten, sodass er die Form eines Quaders hat, und **dadurch gekennzeichnet, dass** eine erste Öffnung (29) auf einer ersten Seite (35) des Einsatzes (10) angeordnet ist, und eine zweite Öffnung (30) auf einer zweiten Seite (36) des Einsatzes (10) angeordnet ist, die an die erste Seite (35) angrenzt und entgegengesetzt zu einer dritten Seite (37) des Einsatzes (10) ist, auf der sich der Deckel (31) befindet.

5. Einsatz nach Anspruch 4, bei dem der Deckel (31) zwei Platten (40, 43) umfasst, die sich jeweils gegenüber der ersten und zweiten Öffnung (29, 30) befinden, wobei jede Platte (40, 43) eine durchgehende Hauptöffnung (41, 44) zur Aufnahme des Stifts (32) umfasst, wenn sich der Deckel (31) in offener Position (O) befindet, sowie eine durchgehende Sekundäröffnung (42, 45), die in die durchgehende Hauptöffnung (41, 44) der Platte (40, 43) mündet, um den Stift (32) zu blockieren, wenn sich der Deckel (31) in geschlossener Position befindet.

6. Zerlegbares Möbelstück, das mindestens eine Platte (1, 2) nach einem der Ansprüche 1 bis 3 umfasst.

7. Möbelstück nach Anspruch 6, das ferner einen wegnehmbaren Einsatz nach Art eines Winkels (17) mit zwei winkelförmigen Teilen (18, 19) umfasst, die durch eine Auflageplatte (20) getrennt sind, die in mindestens eine Vertiefung (16) mindestens einer Aussparung (4 bis 8) der mindestens einen Platte (1, 2) eingeführt ist.

8. Möbelstück nach Anspruch 6 oder 7, das einen wegnehmbaren Einsatz nach Art eines Zapfens (21) mit einem U-förmigen Körper (22) umfasst, der mit einem Nocken (23) versehen ist, der für eine Drehfunktion sorgt, wobei der Körper (22) in mindestens eine Vertiefung (16) mindestens einer Aussparung (4 bis 8) der mindestens einen Platte (1, 2) eingeführt ist.

9. Möbelstück nach einem der Ansprüche 6 bis 8, das einen wegnehmbaren Einsatz nach Art eines Verbinders (10) nach einem der Ansprüche 4 bis 5 umfasst, der in mindestens eine Aussparung (4 bis 8) der mindestens einen Platte (1, 2) zur Montage des Möbelstücks eingeführt ist.

## Claims

1. Panel (1, 2) for a demountable piece of furniture, comprising at least one cut (4 to 8) located on at least one edge (9) of the panel (1, 2), each cut (4 to 8) comprising two main faces (11, 12) facing one another and a secondary face (13) facing an opening (14) of the cut (4 to 8), such as each main face (11, 12) comprises a longitudinal groove (15) extending between the edge (9) and the secondary face (13) in order to receive a removable insert (10), and **characterized in that** each main face (11, 12) comprises a notch (16) perpendicular to the longitudinal groove (15) for holding the removable insert (10) in the cut (4 to 8).

2. Panel according to claim 1, comprising several cuts (4 to 8), each having a same depth.

3. Panel according to claim 1 or 2, wherein the cuts (4 to 8) are distributed over at least one edge (9) of the panel (1, 2) with a constant spacing between them.

4. Removable connector-type insert (10), comprising two opposite tabs (27, 28) intended to be introduced into the two longitudinal grooves (15) of at least one cut (4, 8) of a panel (1, 2) according to one of claims 1 to 3, at least one orifice (29, 30) for receiving a pin (32), and a cover (31) pivotally mounted between an open position (0), in which the pin (32) can be introduced into the insert (10) and the insert (10) can be introduced into said at least one cut (4 to 8), and a closed position (C) in which the pin (32) is locked in the insert (10) and the cover (31) is introduced into the notches (16) of said at least one cut (4 to 8) for holding the insert (10), such that it has a parallelepiped shape and **characterized in that** a first orifice (29) is located on a first face (35) of the insert (10), and a second orifice (30) is located on a second face (36) of the insert (10) adjacent to the first face (35) and opposed to a third face (37) of the insert (10) on which the cover (31) is located.

5. Insert according to claim 4, wherein the cover (31) comprises two plates (40, 43) respectively facing the first and second orifices (29, 30), each plate (40, 43) comprising a main through hole (41, 44) for receiving the pin (32) when the cover (31) is in the open position (O), and a secondary through hole (42, 45) opening into the main through hole (41, 44) of the plate (40, 43) for locking the pin (32) when the cover (31) is in the closed position.

6. Demountable piece of furniture, comprising at least one panel (1, 2) according to one of claims 1 to 3.

7. Piece of furniture according to claim 6, further comprising a corner-type removable insert (17) having two corner-shaped portions (18, 19) separated by a support plate (20) introduced into at least one notch (16) of at least one cut (4 to 8) of said at least one panel (1, 2).

8. Piece of furniture according to claim 6 or 7, comprising a removable pivot-type insert (21) having a U-shaped body (22) provided with a lug (23) providing a pivot function, the body (22) being introduced into at least one notch (16) of at least one cut (4 to 8) of said at least one panel (1, 2).

9. Piece of furniture according to one of claims 6 to 8, comprising a removable connector-type insert (10) according to one of claims 4 to 5 introduced into at least one cut (4 to 8) of said at least one panel (1, 2) for mounting the piece of furniture.
